## Europäisches Patentamt

## European Patent Office

## Office européen des brevets

(19)

(11) Veröffentlichungsnummer: **0 085 992**

**A2**

(12) **EUROPÄISCHE PATENTANMELDUNG**

(21) Anmeldenummer: **83101285.1**

(22) Anmeldetag: **10.02.83**

(51) Int. Cl.³: **B 01 D 25/12**

(30) Priorität: **10.02.82 DE 3204608**

(43) Veröffentlichungstag der Anmeldung:
**17.08.83 Patentblatt 83/33**

(84) Benannte Vertragsstaaten:
**AT CH DE FR GB IT LI**

(71) Anmelder: **Passavant-Werke AG & Co. KG**

**D-6209 Aarbergen 7(DE)**

(84) Benannte Vertragsstaaten:
**CH DE FR IT LI AT**

(71) Anmelder: **U. Passavant AG Michelbacher Hütte**

**D-6209 Aarbergen 7(DE)**

(84) Benannte Vertragsstaaten:
**GB**

(72) Erfinder: **Busse, Oswald, Dr.-Ing.**
**Schillerstrasse 8**
**D-6209 Aarbergen 2(DE)**

(72) Erfinder: **Klesper, Hugo**
**Auf dem Kirchgarten**
**D-6209 Aarbergen 2(DE)**

(74) Vertreter: **Glawe, Delfs, Moll & Partner Patentanwälte**
**Postfach 26 01 62 Liebherrstrasse 20**
**D-8000 München 26(DE)**

(54) **Filterpresse mit aneinander verriegelten und einzeln nacheinander nach Lösung der Verriegelung verschiebbaren Filterplatten.**

(57) Eine Filterpresse mit von einem Transportelement einzeln verschiebbaren Filterplatten hat an jeder Filterplatte einen Riegelhaken, der mit einem Riegelbolzen der benachbarten Filterplatte zur Verriegelung zusammenwirkt, sowie ein schwenkbares Sperrelement, das in Sperrstellung den diese Filterplatte verriegelnden Riegelhaken formschlüssig gegen Entriegelung sperrt und mit einem Betätigungsteil verbunden ist, das derart in den Weg des Transportelementes ragt, daß dieses unmittelbar vor Mitnahme der betreffenden Filterplatte das Betätigungsteil ergreift und damit das Sperrelement in eine Freigabestellung schwenkt, so daß die Filterplatte unter Lösen der Verriegelung abziehbar ist. Auf diese Weise wird erreicht, daß die jeweils zu verschiebende Filterplatte bis unmittelbar vor ihrer Mitnahme durch das Transportelement formschlüssig an noch nicht geöffneten Plattenstapel verriegelt bleibt und sich nicht unbeabsichtigt von diesem lösen kann. Das Sperrelement ist vorzugsweise als ein durch sein Eigengewicht senkrecht nach unten pendelnder Arm eines zweiarmigen Hebels ausgebildet, dessen anderer Arm als Betätigungsteil einem von Transportelement zu ergreifenden Mitnehmer der Filterplatte vorgelagert ist.

Fig 1

0085992

Passavant-Werke AG & Co. KG
6209 Aarbergen 7

Filterpresse mit aneinander verriegelten und
einzeln nacheinander nach Lösung der Verriegelung verschiebbaren Filterplatten

Beschreibung
------------------------------

Die Erfindung betrifft eine Filterpresse mit aneinander verriegelten und einzeln nacheinander nach Lösen
der Verriegelung verschiebbaren Filterplatten, bei der
bei geschlossener Filterpresse jede Filterplatte mit
der ihr folgenden Filterplatte durch einen einen Riegelbolzen hintergreifenden Riegelhaken sowie ein dessen Entriegelungsschwenkung formschlüssig sperrendes Sperrelement
verriegelt ist und beim Öffnen der Filterpresse erst nach
Freigabe des Riegels durch das Sperrelement von der folgenden Filterplatte mittels eines längs der Filterplatte
bewegten Transportelementes abziehbar ist.

Eine Filterpresse dieser Art ist aus DE-OS 25 04 602 bekannt. Bei dieser bekannten Filterpresse sitzt das die Verriegelung zwischen zwei benachbarten Filterplatten sperrende Sperrelement an einer dritten, ihnen in Öffnungsreihenfolge vorausgehenden Filterplatte. Wird diese das Sperrelement tragende Filterplatte durch das Transportelement beim Öffnen der Platte abgezogen, so ist damit die Verriegelung zwischen den beiden folgenden Filterplatten freigegeben, und beim nächsten Hub des Transportelementes kann die dann vorderste dieser beiden Filterplatten mitgenommen werden, usw.. Dies bedeutet aber, daß nach dem Abziehen einer Filterplatte die beiden folgenden Filterplatten in der Zeit bis zum nächsten Hub des Transportelementes nicht mehr formschlüssig miteinander verriegelt sind, sondern allenfalls noch kraftschlüssig, wenn der Riegel als federbelasteter Riegel ausgebildet ist. Es hat sich gezeigt, daß diese kraftschlüssige Arretierung in manchen Fällen nicht ausreichend ist und daß es insbesondere bei sich stark dehnenden Filterkuchen, z.B. Kohleschlämmen, vorkommen kann, daß sich die jeweils vorderste Filterplatte unbeabsichtigt vom noch nicht geöffneten Plattenstapel löst und in eine Zwischenstellung gelangt.

Wird dann beim nächsten Hub des Transportelementes die nunmehr folgende Filterplatte vom Transportelement mitgenommen, so kann sie auf die zuvor in die Zwischenstellung gerollte Filterplatte auftreffen, was zu Betriebsstörungen und Beschädigungen führen kann.

Ähnliche Probleme können z.B. auch bei einer aus US-PS 3 563 386 bekannten Filterpresse auftreten, bei der beim Abziehen einer Filterplatte gleichzeitig die Verriegelung zwischen den beiden nächstfolgenden Filterplatten völlig gelöst wird. Hier hat die dann vorderste Platte des noch ungeöffneten Plattenstapels während der Wartezeit bis zur Rückkehr des Transportelementes überhaupt keine Arretierung mehr am Plattenstapel und kann sich sehr leicht von diesem lösen.

Der Erfindung liegt die Aufgabe zugrunde, eine Filterpresse der genannten Art mit einfachen konstruktiven Mitteln so auszugestalten, daß die formschlüssige Arretierung einer Filterplatte am Plattenstapel bis unmittelbar vor ihrer Mitnahme durch das Transportelement aufrechterhalten bleibt.

Diese Aufgabe wird erfindungsgemäß dadurch gelöst, daß jedes Sperrelement an der zugehörigen Filterplatte zwischen einer die Verriegelung dieser mit der nächstfolgenden Filterplatte sperrenden Sperrstellung und einer Freigabestellung schwenkbar gelagert ist und mit einem Betätigungsteil verbunden ist, das derart in den Weg des Transportelements ragt, daß das Transportelement unmittelbar vor Mitnahme dieser Filterplatte das Betätigungsteil ergreift und über dieses das Sperrelement in die Freigabestellung schwenkt.

Hierdurch wird der Vorteil erzielt, daß beim Abziehen einer Filterplatte die Verriegelung zwischen den beiden folgenden Filterplatten gesperrt bleibt, die nächste Filterplatte also nicht während der Transportzeit der vorangehenden Filterplatte und der Rückkehrzeit des Transportelementes vom Plattenstapel wegrollen bzw. durch den sich dehnenden Filterkuchen weggeschoben werden kann. Erst wenn das Transportelement im Begriff steht, die nun vorderste Filterplatte mitzunehmen, betätigt dieses Transportelement zuerst die Schwenkung des Sperrelementes und damit die Freigabe der Verriegelung der in diesem Moment zu ergreifenden Filterplatte.

Weitere vorteilhafte Ausgestaltungen der Erfindung sind in den Unteransprüchen angegeben.

Ausführungsformen der Erfindung sind in den Zeichnungen dargestellt.

Fig. 1    zeigt schematisch eine Seitenansicht des oberen Bereichs einiger Filterplatten bei bzw. vor dem Öffnen.

Fig. 2    zeigt eine schematische Schnittdarstellung entlang der Linie II-II von Fig. 1.

Fig. 3    zeigt in ähnlicher Darstellung wie Fig. 1 einige Filterplatten bei bzw. nach dem Auflaufen auf den bereits verschobenen Plattenstapel.

Fig. 4    zeigt in ähnlicher Darstellung eine abgewandelte Ausführungsform der Erfindung.

Die Filterpresse besitzt eine Vielzahl von Filterplatten 10, die auf nicht dargestellte Weise an in Längsrichtung der Filterpresse verlaufenden Führungen verschiebbar aufgehängt sind. Beim Filtrationsbetrieb sind die Filterplatten 10 in geschlossener Stellung lückenlos aneinanderliegend gegeneinander gepreßt. Nach jeder Filtrationscharge wird die Filterpresse geöffnet, und die Filterplatten 10 werden einzeln verschoben, so daß der Filterkuchen zwischen ihnen herausfallen bzw. entfernt werden kann . Zum Verschieben der Filterplatten ist ein angetriebenes Transportelement 12 vorgesehen, welches mit Mitnehmern 14 an den Filterplatten zusammenwirkt. Das Transportelement 12 hat eine Abweisfläche 12a, die bewirkt, daß es nicht zwischen die Mitnehmer der im geschlossenen Stapel befindlichen Filterplatten 10, sondern nur hinter den Mitnehmer der jeweils vordersten Filterplatte 10a des Stapels einfallen kann.

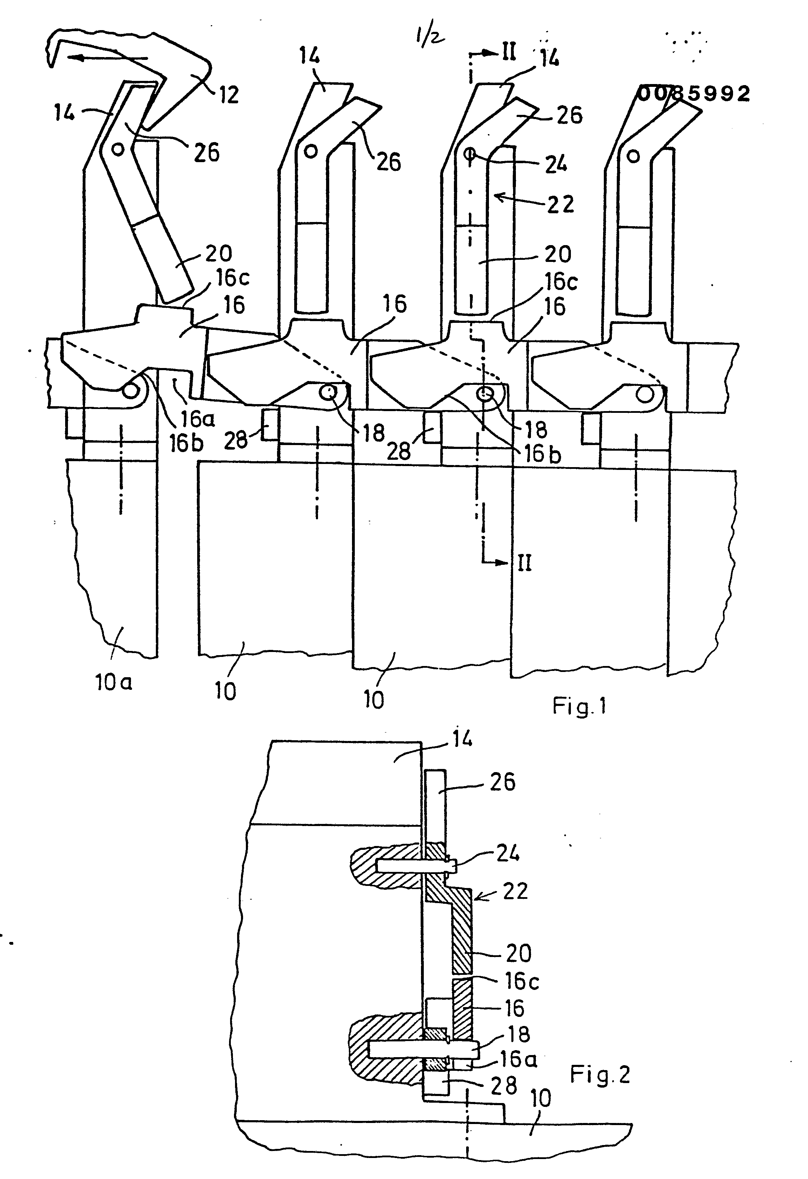

An jeder Filterplatte 10 ist ein Riegelhaken 16 schwenkbar gelagert und erstreckt sich in Richtung auf die in Öffnungsrichtung vorangehende Filterplatte, die einen Riegelbolzen 18 trägt, der vom Riegel 16 übergriffen wird. Der Riegelbolzen 18 kann der verlängerte Lagerbolzen des an derselben Filterplatte gelagerten Riegelhakens 16 sein, und jeder Riegelhaken 16 ist gekröpft ausgebildet, um den Riegelhaken der vorhergehenden Filterplatte seitlich übergreifen zu können (vgl. Fig. 2).

Die mit dem Riegelbolzen 18 zusammenwirkende Riegelausnehmung 16a jedes Riegelhakens hat eine vordere Schrägfläche 16b. Die Länge jeder Ausnehmung 16a ist derart, daß der Riegelbolzen 18 in der Ausnehmung 16a ein für das "Atmen" der Filterplatten ausreichendes Spiel hat.

Jeder Riegelhaken 16 hat eine nach oben gerichtete Nockenfläche 16c. Diese wirkt mit einem Sperrelement 20 zusammen, welches als ein Arm eines zweiarmigen Hebels 22 ausgebildet ist. Dieser ist seitlich neben dem Mitnehmer 14 der betreffenden Filterplatte auf einem Bolzen 24 gelagert, und sein zweiter Arm 26 steht im Winkel zum Arm 20 und ragt derart nach oben, daß er dem Mitnehmer 14 vorgelagert in die Bahn des Transportelementes 12 ragt. In der Normallage oder Sperrstellung hängt der Arm 20 des Hebels 22 im wesentlichen senkrecht nach unten, was durch geeignete Gewichtsverteilung erreicht werden kann, und seine untere Fläche steht in kleinem Abstand über der Nockenfläche 16c des zugehörigen Riegelhakens 16, so daß dieser gegen entriegelndes Hochschwenken gesperrt ist.

Fällt das Transportelement 12 am Mitnehmer 14 der jeweils vordersten Platte 10a des Plattenstapels ein, so erfaßt es zuerst den Arm 26 des Hebels 22 und schwenkt dadurch das Sperrelement 20 in die Freigabestellung. Unmittelbar darauf erfaßt das Transportelement den Mitnehmer 14 und übt eine Verschiebekraft auf die vorderste Filterplatte 10a aus, wodurch deren Riegelbolzen 18 über die Schrägfläche 16b den zugehörigen Riegelhaken 16 hochschwenkt, da V dieser nun durch das in Freigabestellung befindliche Sperrelement 20 nicht mehr gesperrt ist. Die vorderste Platte 10a kann somit vom Transportelement 12 vom Plattenstapel weggezogen werden, ist aber bis unmittelbar vor dem Ergreifen durch das Transportelement 12 am Plattenstapel formschlüssig verriegelt gewesen.

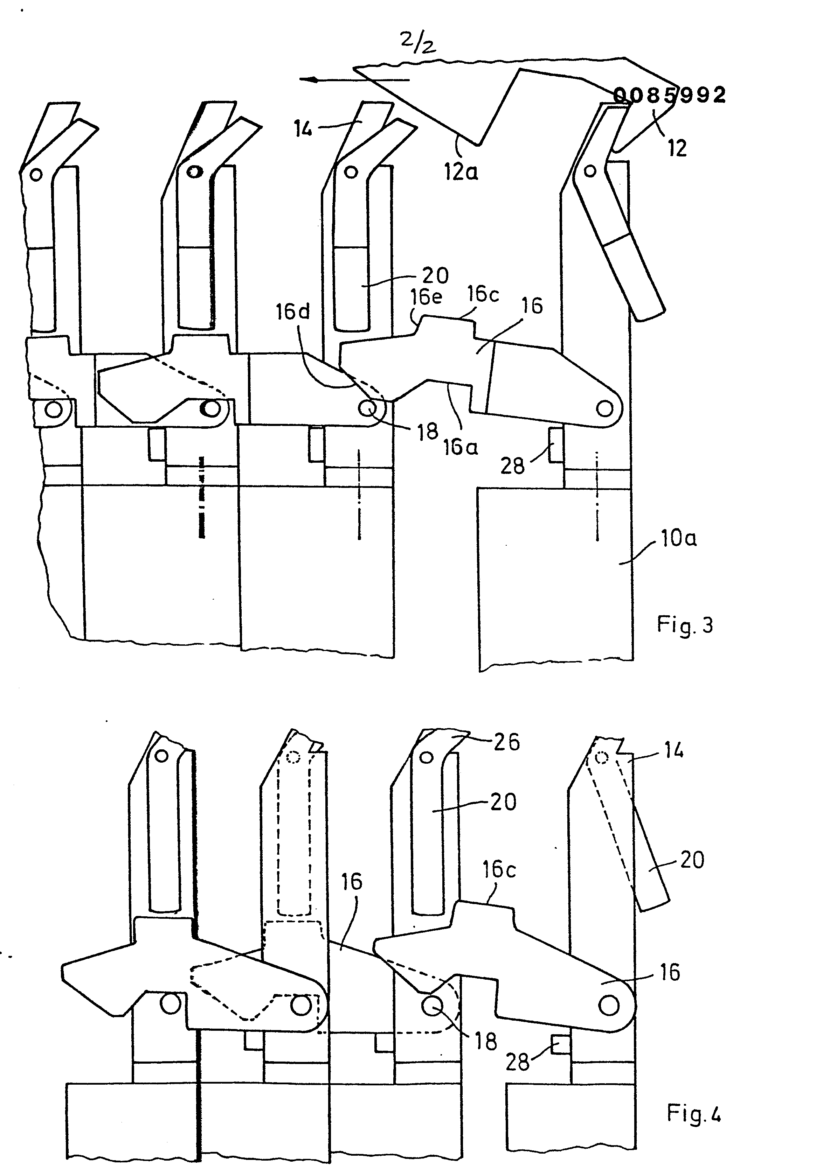

Fig. 3 zeigt das Auftreffen der gerade vom Transportelement 12 transportierten Filterplatte 10a auf den Stapel der bereits früher verschobenen und wieder verriegelten Filterplatten 10. Der Riegelhaken 16 hat eine vordere Auflaufschräge 16d, mit der/er auf den Riegelbolzen 18 der zuvor verschobenen Filterplatte 10 auflaufen und hinter diesen einfallen kann. An der hierfür notwendigen Schwenkbewegung ist der Riegelhaken 16 nicht gehindert, da seine Nockenfläche 16c sich noch nicht unter dem in Sperrlage befindlichen Sperrelement 20 des Stapels der vordersten Filterplatte/befindet. Im Zuge der Weiterbewegung kann der Riegelhaken 16 mit der Vorderflanke 16e

0085992

seiner Nockenfläche 16c das Sperrelement 20 der Filterplatte 10 einfach beiseite schwenken. Ist der Riegelhaken 16 mit seiner Ausnehmung 16a auf den Riegelbolzen 18
eingefallen, so kann das Sperrelement 20 wieder in seine
Sperrlage zurückpendeln und den Riegelhaken 16 formschlüssig sperren. Während dieser Vorgänge ist die Abweisfläche 12a des Transportelementes 12 auf dem Mitnehmer 14 der letzten bereits verschobenen Filterplatte 10
aufgelaufen, wodurch das Transportelement 12 den Mitnehmer 14 der gerade mitgenommenen Filterplatte 10a freigibt.
Der Restschwung der freigegebenen Filterplatte 10a reicht
aus, um die zur vollen Anlage an der vorherigen Filterplatte 10 und zum Einrasten der Verriegelung erforderliche
restliche Bewegung durchzuführen.

Sind alle Filterplatten verschoben worden, so ist
das Filterplattenpaket selbsttätig wieder verriegelt und
wird dann als Ganzes durch das Kopfstück der Presse wieder
in die Ausgangsstellung zurückgefahren.

Jedem Riegelhaken 16 ist eine untere Auflage 28 zugeordnet, auf der sich der Riegelhaken während des Verschiebens abstützt, so daß er nicht nach unten durchfällt.

Bei dünnen Platten kann möglicherweise der Platz auf
einer Seite zur Unterbringung der Riegelhaken und zugeordneten Teile nicht ausreichen. In diesem Fall ist es vorteilhaft, die Riegel abwechselnd auf der einen und anderen Seite der Mitnehmer 14 anzuordnen. Eine solche Anordnung ist in Fig. 4 dargestellt. In diesem Fall ist die in Fig. 1 und 2 dargestellte Kröpfung der Riegelhaken 16 und der Sperrelemente 20 nicht erforderlich. Die Lagerbolzen für die Riegelhaken 16 durchdringen den ganzen Mitnehmer 14 und bilden mit dem an der anderen Seite vorstehenden Ende den Riegelbolzen 18.

Die Erfindung ist nicht auf die Einzelheiten der dargestellten Ausführungsformen beschränkt. Es ist beispielsweise möglich, die Sperrelemente 20 so auszugestalten, daß sie nicht oder nicht nur durch Schwerkraft, sondern durch z.B. Federkraft in die Sperrstellung zurückkehren. Auch braucht der mit dem Transportelement 12 zusammenwirkende Betätigungsteil 26 nicht einstückig mit dem Sperrelement 20 verbunden zu sein, sondern kann auch getrennt und mit dem Betätigungsteil 20 in Wirkverbindung stehend, ausgebildet sein. Wird dem Sperrelement 20 bzw. seinem Betätigungsteil 26 eine Feder für die Rückstellung in die Sperrlage zugeordnet, so kann diese Feder gleichzeitig dazu dienen, den Stoß beim Auffahren des Transportelementes 12 auf den Mitnehmer 14 jeder Filterplatte abzumildern.

Die Riegelhaken 16, die bei den dargestellten Ausführungsformen durch ihr Eigengewicht auf den zugeordneten Riegelbolzen 18 aufliegen, können stattdessen oder zusätzlich durch Federn gegen die Riegelbolzen verspannt werden. Hierdurch besteht auch dann, wenn das zugehörige Sperrelement 20 verschwenkt und die formschlüssige Verriegelung dadurch aufgehoben ist, immer noch eine kraftschlüssige Arretierung der jeweils abzuziehenden Platte. Dies dürfte sich zwar im Normalbetrieb nicht auswirken, weil das Zeitintervall zwischen Entsperrung der Verriegelung und Mitnahme der Filterplatte sehr kurz ist, jedoch kann,wenn z.B. durch Betriebsstörungen, Verschmutzung od.dgl. eines der Sperrelemente nicht in die Sperrlage zurückpendeln sollte, die vorgenannte kraftschlüssige Halterung der Platten aneinander vorteilhaft sein.

0085992

Passavant-Werke AG & Co. KG
6209 Aarbergen 7

Filterpresse mit aneinander verriegelten und
einzeln nacheinander nach Lösung der Verriegelung verschiebbaren Filterplatten

P a t e n t a n s p r ü c h e
------------------------------------

1.    Filterpresse mit aneinander verriegelten und einzeln
nacheinander nach Lösen der Verriegelung verschiebbaren
Filterplatten, bei der bei geschlossener Filterpresse jede
Filterplatte mit der ihr folgenden Filterplatte durch einen
einen Riegelbolzen hintergreifenden Riegelhaken sowie ein
dessen Entriegelungsschwenkung formschlüssig sperrendes
Sperrelement verriegelt ist und beim Öffnen der Filterpresse
erst nach Freigabe des Riegels durch das Sperrelement von
der folgenden Filterplatte mittels eines längs der Filterplatte bewegten Transportelementes abziehbar ist, dadurch
g e k e n n z e i c h n e t , daß jedes Sperrelement (20) an der zugehörigen Filterplatte (10) zwischen einer die Verriegelung dieser Filterplatte mit der nächstfolgenden Filterplatte sperrenden Sperrstellung und einer Freigabestellung schwenkbar gelagert ist und mit einem Betätigungsteil (26) verbunden ist,das derart in den Weg des Transportelementes (12) ragt, daß das Transportelement (12) unmittelbar vor Mitnahme dieser Filterplatte (10) das Betätigungsteil (26) ergreift und über dieses das Sperrelement (20) in die Freigabestellung schwenkt.

2.    Filterpresse nach Anspruch 1 , dadurch g e - k e n n z e i c h n e t , daß das Sperrelement (20) nach Freigabe des Betätigungsteils (26) durch das Transportelement (12) selbsttätig in die Sperrstellung zurückkehrt.

3.    Filterpresse nach Anspruch 1 oder 2 , dadurch g e k e n n z e i c h n e t , daß das Sperrelement (20) als ein Arm eines zweiarmigen Hebels (22) ausgebildet ist, dessen anderer Arm das Betätigungsteil (26) bildet.

0085992

4. Filterpresse nach Anspruch 3 , dadurch g e -
k e n n z e i c h n e t , daß der das Sperrelement (20)
bildende Arm des Hebels (22) in der Sperrstellung senkrecht nach unten steht und mit seiner unteren Fläche
in geringem Abstand über einer Gegenfläche (16c) des
den zugehörigen Riegelbolzen (18) von oben übergreifenden
Riegelhakens (16) steht.

5. Filterpresse nach Anspruch 3 und 4 , dadurch
g e k e n n z e i c h n e t , daß der Hebel (22) durch
seine Gewichtsverteilung freipendelnd in die Sperrstellung zurückkehrt.

6. Filterpresse nach einem der Ansprüche 1 bis 5 ,
dadurch g e k e n n z e i c h n e t , daß das Betätigungsteil (26) einem vom Transportelement (12) zu ergreifenden Mitnehmer (14) der Filterplatte (10) bezüglich der Bewegungsrichtung des Transportelementes (12)
vorgelagert angeordnet ist.

7. Filterpresse nach einem der Ansprüche 1 bis 6 ,
dadurch g e k e n n z e i c h n e t , daß der Riegelhaken (16) eine Schrägfläche (16b) für das Abziehen vom
zugehörigen Riegelbolzen (18) bei in Freigabestellung
befindlichem Sperrelement (20) aufweist.

0085992

8.     Filterpresse nach einem der Ansprüche 1 bis 7 ,
dadurch  g e k e n n z e i c h n e t ,  daß der Riegelbolzen (18) in der Riegelausnehmung (16a) des zugehörigen Riegelhakens (16) mit einem geringe Abstandsänderungen der Filterplatten zueinander (Atmen) ermöglichenden
Spiel ergriffen ist.

9.     Filterpresse nach einem der Ansprüche 1 bis 8 ,
dadurch  g e k e n n z e i c h n e t ,  daß jeder Riegelhaken (16) sich von der zugehörigen Filterplatte (10) in
Richtung auf die in Öffnungsreihenfolge vorangehende
Filterplatte erstreckt und eine Auflaufschräge (16d)
für das Auflaufen auf den Riegelbolzen (18) dieser vorangehenden Filterplatte sowie einen Anschlag (16c) zum
Beiseiteschieben des in Sperrstellung befindlichen Sperrelements (20) dieser vorangehenden Filterpresse aufweist.

Fig.1

Fig.2

0085992

0085992

Fig. 3

Fig. 4